# EUROPÄISCHE PATENTSCHRIFT

(11) **EP 1 497 535 B1**
(45) Veröffentlichungstag und Bekanntmachung des Hinweises auf die Patenterteilung: **04.10.2006**
(21) Anmeldenummer: 02730210.8
(22) Anmeldetag: 25.04.2002
(51) Int. Cl.: E21C 35/12, B65G 19/28

(54) **RINNENSCHUSS FÜR STREBFÖRDERER MIT LADERAMPE**
TROUGH PAN FOR A FACE CONVEYOR WITH A LOADING RAMP
BAC DE SAIGNEE POUR CONVOYEUR DE TAILLE AVEC RAMPE DE CHARGEMENT

(43) Veröffentlichungstag der Anmeldung: 19.01.2005
(73) Patentinhaber: DBT GmbH, 44534 Lünen (DE)
(72) Erfinder: SCHMIDT, Siegfried, 46242 Bottrop (DE); WIRTZ, Jörg, 59174 Kamen (DE)
(74) Vertreter: Althaus, Arndt
(86) Internationale Anmeldenummer: PCT/EP2002/004589
(87) Internationale Veröffentlichungsnummer: WO 2003/091541

(56) Entgegenhaltungen:
- DE-A- 2 049 156
- DE-A- 3 215 715
- DE-A- 3 235 473
- DE-B- 1 758 066
- DE-C- 3 223 575
- GB-A- 650 495
- GB-A- 1 239 015
- GB-A- 2 096 671

## Beschreibung

Die Erfindung betrifft einen Rinnenschuß für Strebförderer von untertägigen Gewinnungsanlagen, insbesondere Kohlengewinnungsanlagen, mit Fördertrum und Rücklauftrum zur Führung einer Kratzerkette, zwischen denen ein Rinnenboden ausgebildet ist, mit versatzseitig und abbaustoßseitig an den Rinnenschußenden angeordneten Haltemitteln für ein benachbarte Rinnenschüsse zugfest miteinander verbindendes Rinnenschußverbindungselement, vorzugsweise mit Führungsmitteln für eine am Abbaustoß entlangbewegbare Gewinnungsmaschine und mit einer abbaustoßseitig am Rinnenschuß angeschlossenen, vom Liegenden bis auf Höhe des Fördertrums sich erstreckenden statischen Laderampe, über die beim Rücken des Strebförderers Haufwerk in den Fördertrum ladbar ist und die aus einem gekrümmten oder insbesondere gewinkelten Leitblech besteht, dessen unterer Abschnitt relativ zum Liegenden bzw. relativ zum Rinnenboden steiler verläuft als dessen oberer Abschnitt.

Rinnenschüsse für Strebförderer sind in unterschiedlichen Ausgestaltungen bekannt. Das Laden des Haufwerks in den Fördertrum des Strebförderers kann bei untertägigen Gewinnungsanlagen, bei denen die Gewinnungsmaschine am Abbaustoß entlangfährt, wie z.B. bei Gewinnungsanlagen mit einem Gewinnungshobel, mittels spezieller Einrichtungen oder Leitbleche an der Gewinnungsmaschine vorgenommen werden. Rinnenschüsse mit statischen Laderampen kommen insbesondere in Gewinnungsanlagen zum Einsatz, die mit fahrbaren Gewinnungsmaschinen, die zwischen Förderer und Abbaustoß entlangfahren, arbeiten, die stationäre und z.B. am Ausbaugestell befestigte Gewinnungsmaschinen aufweisen (DE 197 36 662) oder die als Führungen für Walzenlader vorgesehen sind. Bei derartigen Gewinnungsanlagen mit Walzenladern kann das abbaustoßseitige Führungsmittel, z.B. eine Gleitschiene oder Fahrbahn für den Walzenlader, zugleich auch den unteren Abschnitt einer Laderampe des Strebförderers bilden (DE 197 20 535) .

Aus der DE 32 15 715 A1 ist ein Rinnenschuß mit einer abbaustoßseitigen Führungseinrichtung für einen Walzenlader (Walzenschrämmaschine) bekannt, die ein etwa L-förmiges Profilblech umfaßt, an deren abbaustoßseitig vorragenden und auf dem Liegenden aufliegenden Schenkel eine Laufschiene befestigt ist, an der sich der Maschinenkörper des Walzenladers mit Gleitkufen oder Rollenkufen abstützen kann. Vor die Schenkel des Profilblechs sind weitere Bleche vorgeschweißt, von denen eines eine Verstärkung für die untere Laufbahn und ein anderes eine Rippe bildet, deren unterer Endbereich einen Anschlag für die Kufen des Walzenladers bildet und somit die Laufbahn versatzseitig begrenzt. Dieses, die Rippe bildende Blech ist bei einem Ausführungsbeispiel gradlinig und bei einem anderen Ausführungsbeispiel abgewinkelt gekrümmt. Um das Rücken der Rinnenschüsse zu begünstigen, ist das auf dem horizontalen Schenkel aufgeschweißte Blech an seiner dem Abbaustoß zugewandten Stirnseite mit einer Schräge versehen.

Aus der DE 17 58 066 A1 sind Rinnenschüsse für eine Gewinnungsanlage bekannt, deren dem Abbaustoß zugewendete Seitenwand mit plattenartigen Leitschienen versehen ist, die ggf. mehrfach abgewinkelt gekrümmt ist. Die Leitschiene ist mit der Fördererseitenwand höhenverstellbar verbunden und in mehreren Lagen einstellbar, um die Rinnenschüsse des Förderers durch Verstellen der Leitschiene an die gewählte Verhiebrichtung anpassen zu können. Durch das Verstellen der Leitschiene kann die Berührung des Kohlenhobels mit dem Abbaustoß auch an sich ändernde fallende oder streichende Verhiebe angepaßt werden.

Beim Strebausbau werden die zu einem Strebförderer zusammengeschlossenen Rinnenschüsse über die an den Ausbaugestellen widergelagerten Ausleger bzw. Schreitbalken gerückt. Beim Rücken zeigen die Rinnenschüsse der Strebförderer eine Tendenz zum Klettern, d.h. zum Abheben vom Liegenden und diesem negativen Kletterverhalten muß mit geeigneten Steuerungsmaßnahmen für die Schnitthorizonteinstellung entgegengewirkt werden. Das Klettern des Strebförderers ist insbesondere dann von Nachteil, wenn, wie bei Walzenladern, die Gewinnungsmaschine am Strebförderer geführt ist.

Aufgabe der Erfindung ist es, das negative Kletterverhalten eines Strebförderers durch konstruktive Maßnahmen am Rinnenschuß zu minimieren und die Montage bzw. Demontage der Rinnenschüsse des Strebförderers zu vereinfachen.

Diese Aufgabe wird mit der in Anspruch 1 angegebenen Erfindung gelöst. Für die Montage und Demontage des Strebförderers und einen erleichterten Austausch einzelner Rinnenschüsse ist erfindungsgemäß vorgesehen, daß das das Leitblech an den Rinnenschußenden mit Aussparungen versehen ist, deren Größe an die Ausmaße der Haltemittel und/oder Rinnenschußverbindungsmittel angepaßt ist. Im Stand der Technik bestanden die statischen Laderampen bisher meist aus Anbauteilen, die abbaustoßseitig an den Seitenwänden bzw. Seitenprofilen der Rinnenschüsse befestigt wurden und eine über die gesamte Höhe des Rinnenschusses ebene, d.h. keilförmig zum Abbaustoß bzw. zum Liegenden ausgerichtete Rampe oder aber eine gekrümmte Rampe aufwiesen, welche im unteren Abschnitt relativ flach verläuft und zum Fördertrum hin steiler wird, mithin zum Abbaustoß hin gekrümmt ist. Die Anmelderin hat erkannt, daß durch Befestigung eines abbaustoßseitigen Leitblechs und durch eine Abänderung der Linienführung des Leitblechs in eine vom Abbaustoß wegweisende Krümmung das Kletterverhalten des Strebförderers beim Rücken abnimmt. Die Krümmung besteht insbesondere aus einer Abwinklung des Leitblechs dergestalt, daß das Leitblech im unteren Abschnitt den steileren Verlauf aufweist. Durch diese Maßnahmen baut die statische Laderampe insgesamt relativ kurz und sie erhöht das Gesamtgewicht des Rinnenschuß nur geringfügig.

Bei der von der Anmelderin bevorzugten Ausgestaltung des Rinnenschusses kann die Scheitellinie der Krümmung bzw. die Scheitellinie der Abwinklung des Leitblechs auf Höhe des Rinnenbodens, vorzugsweise zwischen Mitte und Unterseite des Rinnenbodens angeordnet sein und/oder sie liegt unterhalb der Mittellinie des Kraftangriffspunktes der am Ausbau widergelagerten Ausleger bzw. Schreitbalken am Rinnenschuß, mithin unterhalb des Anlenkpunktes des versatzseitig angeordneten Schreitwerks, mit dem der Strebförderer gerückt wird. Insbesondere bevorzugt wird hierbei ein Leitblech mit zueinander abgewinkelten Abschnitten, wobei sowohl der untere als auch der obere Abschnitt im wesentlichen eben sind und einen Winkel von etwa 150°-170°, vorzugsweise etwa 160° ± 4° einschließen. Ferner ist vorteilhaft, wenn der untere Abschnitt relativ zum Rinnenboden um einen Winkel von etwa 65°-85°, vorzugsweise 78° ± 4° abgewinkelt ist und der obere Abschnitt relativ zum Rinenboden um einen Winkel von etwa 45°-65°, vorzugsweise 55° ± 4° abgewinkelt ist.

Die Haltemittel am Rinnenschuß bestehen vorzugsweise aus Knebelbolzentaschen und die Rinnenschußverbindungsmittel bestehen vorzugsweise aus Knebelbolzen, deren Knebelköpfe in die Knebelbolzentaschen einlegbar sind. Die Aussparung kann insbesondere derart ausgebildet sein, daß der untere Abschnitt des Leitblechs am unteren Rand eine Stegleiste aufweist bzw. bildet, die bis an beide Rinnenschußenden heranreicht, so daß das Leitblech an seinem unteren Rand über die gesamte Rinnenschußlänge mit dem Bodenblech od.dgl. des Rinnenschuß abschließt und nur jeweils an den Rinnenschußenden Aussparungen aufweist, in die Kohleklein und Feinkohle eintreten kann. Da sich diese Aussparungen nach kurzer Betriebszeit des Strebförderers zusetzen, wird die Ladewirkung der statischen Laderampe durch die Aussparungen nicht beeinflußt und der erfindungsgemäße Rinnenschuß behält sein gegenüber gattungsgemäßen Rinnenschüssen vermindertes negatives Kletterverhalten. Die Begrenzungswand der Aussparung, die im wesentlichen parallel zu den Rinnenschußenden verläuft und sich bis auf die Höhe des Fördertrums fortsetzt, ist vorzugsweise mit einer Ausbuchtung versehen, so daß einerseits genügend Freiraum zum Einlegen/Herausnehmen der Knebelköpfe der Knebel vorhanden ist, und andererseits durch die Ausbuchtung eine Art Freischnitt erzielt wird, aus der am Übergangspunkt vom Leitblech zur Aussparung eine bessere Einleitung der aufzunehmenden Kräfte in den angeschlossenen bzw. angeschweißten Bereich des Rinnenschusses resultiert.

In bevorzugter Ausgestaltung ist das Leitblech am Rinnenschuß angeschweißt. Besonders günstig ist dann, wenn das Leitblech in seinem unteren Abschnitt, insbesondere mit der Stegleiste an seinem unteren Rand an einer abbaustoßseitigen Bodenleiste, an einer Gleitleiste oder an einer Maschinenführung für die Gewinnungsmaschine angeschweißt ist. Durch die Schweißnaht am unteren Rand und die Verbindung mit einer Bodenleiste oder Gleitleiste werden die auf dem Liegenden angeordneten Haufwerksschichten beim Rücken des Förderers über die gesamte Rinnenschußbreite nach oben gedrückt, ohne daß in diesem Bereich Kohle od.dgl. hinter das Leitblech treten und ein ungünstiges Klettern des Förderers bewirken kann.

Das erfindungsgemäße Leitblech läßt sich sowohl bei Rinnenschüssen mit fest aneinander montiertem Untertrum und Fördertrum als auch bei Rinnenschüssen mit Wechseltrog als Fördertrum einsetzen. Bei fest montiertem Fördertrum kann, wie beispielsweise aus der DE 40 06 183 A1 bekannt, das Seitenprofil aus Walzprofilen bestehen und einen annähernd T-förmigen Querschnitt aufweisen, wobei dann das Leitblech mit seinem oberen Abschnitt an der Unterseite des Horizontalstegs des L-förmigen oder T-förmigen Seitenprofils angeschweißt werden kann. Bei Rinnenschüssen mit einem Wechseltrog als Förderertrum ist das Leitblech vorzugsweise mit seinem oberen Abschnitt an der den Wechseltrog aufnehmenden Rahmenkonstruktion angeschweißt.

Da beim Rücken des Strebförderers und beim Laden des Haufwerks in den Fördertrum erhebliche Kräfte auf das Leitblech einwirken, sind vorzugsweise zwischen dem Leitblech und der abbaustoßseitigen Seitenwand und/oder den Seitenprofilen von Förderertrum und/oder Rücklauftrum wenigstens zwei Stützbleche angeordnet. Dies ermöglicht auch, die Dicke des Leitblechs relativ niedrig zu halten. Zweckmäßigerweise weist dann das Leitblech vertikal verlaufende Schlitzaussparungen auf Höhe der Stützbleche auf, so daß in den Schlitzaussparungen weitere Schweißnähte angebracht werden können, mit denen das Leitblech mit dem Rinnenschuß verbunden wird. Zwischen den Schlitzaussparungen und/oder mittig kann das Leitblech mit einer Einhängeöffnung für ein Hebemittel versehen sein.

Die bevorzugte Verwendung der erfindungsgemäßen Rinnenschüsse liegt bei Strebförderern mit Führungsmitteln für eine schneidende Gewinnungsmaschine, insbesondere mit Führungsmitteln für einen Walzenlader. Bei einem Rinnenschuß mit Führungsmitteln für einen Walzenlader kann die Kletterneigung weiter minimiert werden, wenn der Horizontalsteg des abbaustoßseitigen Seitenprofils des Fördertrums zugleich die abbaustoßseitige Führung für den Walzenlader bildet und der Walzenlader auf dem Horizontalsteg des abbaustoßseitigen Seitenprofils läuft. Diese Maßnahmen sorgen zugleich für eine kompaktere Bauart der Gewinnungsanlage, so daß auch die Hangendkappe an den Ausbaugestellen kürzer ausgelegt werden kann als bei Rinnenschüssen, die abbaustoßseitig vor dem abbaustoßseitigen Seitenprofil der Rinnenschüsse eine separate Maschinenfahrbahn aufweisen.

Weitere Vorteile und Ausgestaltungen des erfindungsgemäßen Rinnenschuß ergeben sich aus der nachfolgenden Beschreibung eines in der Zeichnung dargestellten Ausführungsbeispiels. In der Zeichnung zeigen:
- **Fig. 1**: in perspektivischer Ansicht einen erfindungsgemäßen Rinnenschuß mit abbaustoßseitig angeschweißtem Leitblech als Laderampe; und
- Fig. 2: eine Teilschnittansicht entlang der Linie II-II in Fig. 1.

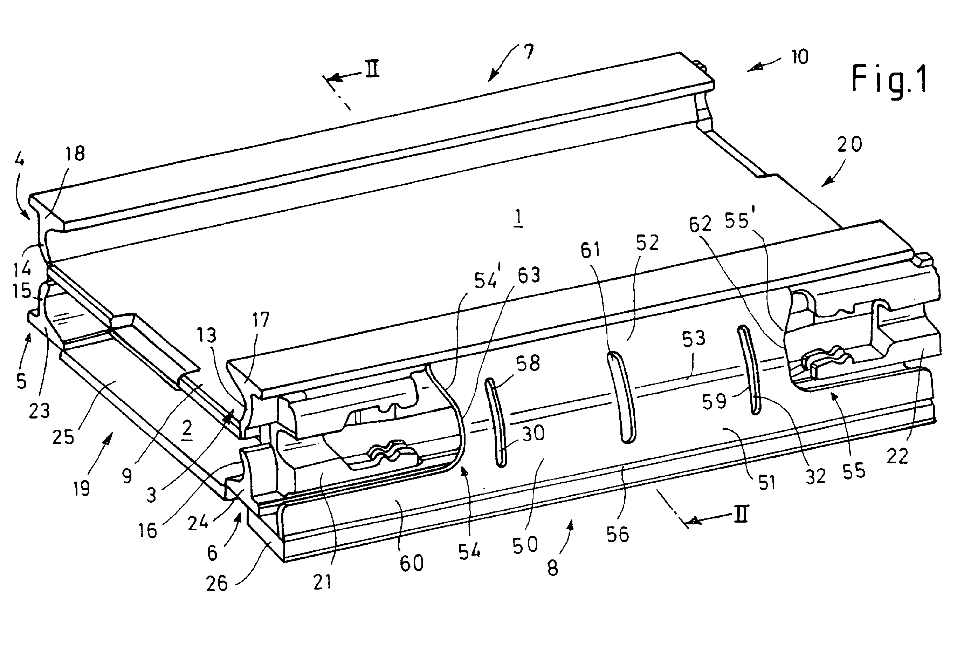

Der perspektivisch in Fig. 1 dargestellte Rinnenschuß 10 findet beispielsweise bei Mittelketten- oder Doppelmittelkettenkratzförderern Verwendung, bei dem das aus einer Einzel- bzw. Doppelkette bestehende Kratzerkettenband etwa in der Mitte der Förderrinne geführt ist und bei dem sich die Kratzer mit ihren Enden in Führungskanälen führen, die im oberen Fördertrum 1 und im unteren Rücklauftrum bzw. Untertrum 2 gebildet und z.B. mittels der T-förmigen Seitenprofile 3, 4, 5, 6 begrenzt werden. Aus einzelnen Rinnenschüssen 10 wird dann, wie üblich, ein Strebförderer gebildet, dessen in Fig. 1 hintere Längsseite 7 versatzseitig angeordnet ist, während die in Fig. 1 vordere Längsseite 8 parallel zum nicht dargestellten Abbaustoß im untertägigen Streb ausgerichtet ist. Der Fördertrum 1 und der Untertrum 2 werden durch einen Rinnenboden 9 voneinander getrennt, an dem im gezeigten Ausführungsbeispiel sämtliche Seitenprofile 3, 4, 5, 6 mit ihren dem Rinnenboden 9 jeweils zugewandten und an die Profilform der nicht dargestellten Kratzer angepaßten Stützschenkeln 13, 14, 15, 16 angeschweißt sind. Im gezeigten Ausführungsbeispiel sind sämtliche Seitenprofile 3 bis 6 zueinander identisch ausgebildet und bestehen aus Walzprofilen mit im wesentlichen T-förmigem Querschnitt, wobei jeweils der an die Kratzerenden im Profil angepaßte Profilschenkel 13, 14, 15, 16 den Vertikalschenkel bildet, der in einen Horizontalsteg 17, 18, 23, 24 übergeht. Sowohl versatzseitig als auch abbaustoßseitig sind jeweils nahe der von den Querseiten gebildeten Rinnenschußenden 19 bzw. 20 Knebeltaschen 21 bzw. 22 angeschweißt, in die, wie bekannt, die Knebelköpfe von Knebelbolzen eingreifen, um benachbarte Rinnenschüsse 10 zugfest, jedoch in der Horizontalen und Vertikalen geringfügig winkelbeweglich, miteinander zu verbinden. Die versatzseitigen Knebeltaschen und die Knebelbolzen sind nicht dargestellt. Unterhalb der Horizontalschenkel 23, 24 der Seitenprofile 5, 6 des Untertrums 2 ist ein Bodenblech 25 angeschweißt. Fig. 1 läßt weiter erkennen, daß, wie an sich bekannt, der Rinnenboden 9 an beiden Rinnenschußenden 19, 20 mit komplementär zueinander ausgebildetem Überlappungsprofil versehen ist.

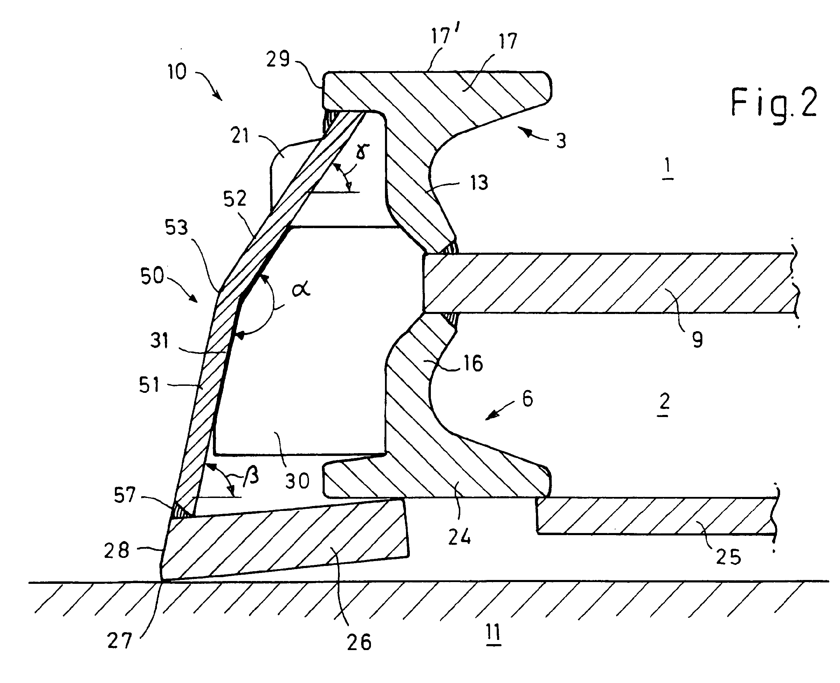

Der Rinnenschuß 10 weist erfindungsgemäß an der Abbaustoßseite 8 eine statische Laderampe für Haufwerk von gelöstem Gestein, insbesondere gelöster Kohle auf, die aus dem insgesamt mit 50 bezeichneten und am Rinnenschuß 10 angeschweißten Leitblech besteht und sich vom Liegenden 11 (Fig. 2) bis auf Höhe des Fördertrums 1 erstreckt. Das Leitblech 50 umfaßt einen unteren Abschnitt 51 und einen oberen Abschnitt 52, die jeweils im wesentlichen eben sind und an der Scheitellinie 53 zueinander abgewinkelt sind. Im Bereich der beiden Knebeltaschen 21, 22 ist das Leitblech 50 mit Aussparungen 54 bzw. 55 versehen, die sich über die gesamte Höhe des oberen Abschnitts 52 und etwa über die halbe Höhe des unteren Abschnitts 51 erstrecken. Die Ausmaße und Abmessungen der Aussparungen 54, 55 am Leitblech 50 sind an die Ausmaße und Abmessungen der Knebeltaschen 21, 22 sowie der in diese einlegbaren, nicht gezeigten Knebelbolzen angepaßt. Der untere Rand 56 des unteren Abschnitts 51 des Leitblechs 50 erstreckt sich über die gesamte Rinnenschußbreite, so daß das Leitblech 50 eine schmale, sich über die gesamte Rinnenschußbreite erstreckende Stegleiste 60 bildet, um das Haufwerk beim Vorrücken des Strebförderers in Richtung auf den Fördertrum 1 zu richten. Der untere Rand der Stegleiste 60 ist über eine Schweißnaht (57, Fig. 2) mit einer Gleitleiste 26 verschweißt, die unterhalb des Horizontalstegs 24 des unteren, abbaustoßseitigen Seitenprofils 6 angeschweißt ist. Die Gleitleiste ragt über die Seitenwand des Rinnenschuß 10, die von den Außenflächen der Seitenprofile 3, 6 und dem Rinnenboden 9 gebildet wird, abbaustoßseitig hinaus. Die Stegleiste 60 bildet jeweils die untere Begrenzungswand der Aussparungen 54, 55 während die im wesentlichen vertikal verlaufende Begrenzungswand 54', 55' der Aussparungen 54, 55 etwa auf Höhe der Scheitellinie 53 mit einer Ausbuchtung 62 bzw. 63 versehen ist. Durch die Ausbuchtung 62, 32 geht der obere Abschnitt 52 des Leitblechs mit einem geschwungenen Profilverlauf in den Rinnenschuß über. Über die Ausbuchtungen 62, 63 und den geschwungenen Profilverlauf wird die Gefahr der Bildung von Bruchrissen im Seitenprofil 3 reduziert.

Wie Fig. 2 gut erkennen läßt, ist die Gleitleiste 26 relativ zum Rinnenboden bzw. zum Bodenblech 25 um einen geringen Winkel von etwa 5° abgeneigt, so daß der Rinnenschuß 10 nur im vorderen Bereich 27 der Unterseite der Gleitleiste 26 auf dem Liegenden 11 im untertägigen Streb aufliegt. Aus Fig. 2 ist insbesondere auch ersichtlich, daß das die Laderampe bildende Leitblech 50 zwischen dem unteren Abschnitt 51 und dem oberen Abschnitt 52 einen Winkel α von etwa 160° einschließt und daß der untere Abschnitt 51 relativ zum Liegenden 11 bzw. zum Rinnenboden 9 steiler verläuft als der obere Abschnitt 52 des Leitblechs 50. Die Abwinklung des unteren, im wesentlichen ebenen Abschnitts 51 des Leitblechs 25 zum Rinnenboden 9 ist in Fig. 2 mit β bezeichnet und beträgt etwa 78° ± 4°, während der Winkel γ des oberen Abschnitts 52 zum Rinnenboden 9 etwa 55° ± 4° beträgt. Durch diese unterschiedliche Neigung des unteren Abschnitts 51 und des oberen Abschnitts 52 und den insgesamt äußerst steilen Verlauf der Laderampe 50 zwischen der abbaustoßseitigen Stirnfläche 28 der Gleitleiste 26 und der Stirnfläche 29 des Horizontalstegs 17 des Seitenprofils 3 des Fördertrums baut der erfindungsgemäße Rinnenschuß wesentlich kürzer, als dies bei bekannten Rinnenschüssen der Fall war.

Zwischen dem Leitblech 50 und den Außenflächen der Seitenprofile 3, 6 sind Stützbleche 30 angeordnet, deren abbaustoßseitige Kantenfläche 31 an die Kontur der Abwinklung des Leitblechs 50 angepaßt ist. Die Stützbleche 30 sind an den Seitenprofilen 3,6 und ggf. dem Rinnenboden 9 angeschweißt und das Leitblech 50 weist, wie in Fig. 1 gezeigt, zwei Vertikalschlitze 58, 59 auf, die auf Höhe und parallel zu den Stützblechen 30, 32 verlaufen, um in den Vertikalschlitzen 58, 59 Schweißnähte zur zusätzlichen Versteifung zwischen dem Leitblech 50 und den Stützblechen 30, 32 vorzusehen. Zwischen den Vertikalschlitzen 58, 59 ist eine Einhängeöffnung 61 ausgebildet, die mittig am Leitblech 50 angeordnet ist und sich vertikal erstreckt.

In der Darstellung des Rinnenschuß 10 sind die Führungsmittel für eine Gewinnungsmaschine nicht dargestellt. Bei der bevorzugten Verwendung der Rinnenschüsse ist versatzseitig eine Anbauleiste mit z.B. einem Triebstock für einen Walzenlader montiert und der Horizontalsteg 17 des abbaustoßseitigen Seitenprofils 3 des Fördertrums 1 bildet mit seiner Oberseite 17' eine Maschinenfahrbahn für den Walzenlader.

Für den Fachmann ergeben sich aus der vorhergehenden Beschreibung eine Reihe von Modifikationen, die in den Schutzbereich der anhängenden Ansprüche fallen sollen. Bei einer nicht dargestellten Ausführungsform mit Wechseltrog wird das Leitblech am oberen Rand mit der Rahmenkonstruktion zur Abstützung und Befestigung des Wechseltrogs verschweißt. Ferner könnte vor dem die statische Laderampe bildenden abgewinkelte Leitblech auch ein Abschnitt einer Maschinenfahrbahn ausgebildet sein. Anstelle eines abgewinkelten Leitblechs mit ebenen Abschnitten könnte das Leitblech auch in Grenzen gerundet bzw. gekrümmt sein und die Scheitellinie könnte auch oberhalb des Rinnenbodens liegen. Für die Haltemittel und Rinnenschußverbindungsmittel könnten andere als die dargestellten Knebeltaschen und zugehörigen Knebelbolzen verwendet werden, wodurch sich auch die Formgebung der Aussparungen ändert.

## Patentansprüche

1. Rinnenschuß für Strebförderer von untertägigen Gewinnungsanlagen, insbesondere Kohlengewinnungsanlagen, mit Fördertrum und Rücklauftrum zur Führung einer Kratzerkette, zwischen denen ein Rinnenboden angeordnet ist, mit versatzseitig und abbaustoßseitig an den Rinnenschußenden angeordneten Haltemitteln für ein benachbarte Rinnenschüsse zugfest miteinander verbindendes Rinnenschußverbindungselement, vorzugsweise mit Führungsmitteln für eine am Abbaustoß entlangbewegbare Gewinnungsmaschine und mit einer abbaustoßseitig am Rinnenschuß angeschlossenen, vom Liegenden bis auf Höhe des Fördertrums sich erstreckenden statischen Laderampe, über die beim Rücken des Strebförderers Haufwerk in den Fördertrum ladbar ist, und die aus einem gekrümmten oder gewinkelten Leitblech (50) besteht, dessen unterer Abschnitt (51) relativ zum Liegenden (11) bzw. zum Rinnenboden (9) steiler verläuft als dessen oberer Abschnitt (52), **dadurch gekennzeichnet, daß** das Leitblech (50) an den Rinnenschußenden (19, 20) mit Aussparungen (54, 55) versehen ist, deren Größe an die Ausmaße der Haltemittel und/oder Rinnenschußverbindungsmittel angepaßt ist.

2. Rinnenschuß nach Anspruch 1, **dadurch gekennzeichnet, daß** die Scheitellinie (53) der Krümmung oder Abwinklung des Leitblechs (50) auf Höhe des Rinnenbodens (9), vorzugsweise zwischen Mitte und Unterseite des Rinnenbodens (9) angeordnet ist.

3. Rinnenschuß nach Anspruch 1 oder 2, **dadurch gekennzeich-**net, daß die Scheitellinie (53) der Krümmung oder Abwinklung des Leitblechs (50) unterhalb des Anlenkpunktes des versatzseitig angeordneten Schreitwerks oder Schreitbalkens zum Rücken des Strebförderers angeordnet ist.

4. Rinnenschuß nach einem der Ansprüche 1 bis 3, **dadurch gekennzeichnet, daß** der untere Abschnitt (51) und der obere Abschnitt (52) des abgewinkelten Leitblechs (50) im wesentlich eben sind und einen Winkel (α) von etwa 150°-170°, vorzugsweise etwa 160° ± 4° einschließen.

5. Rinnenschuß nach einem der Ansprüche 1 bis 4, **dadurch gekennzeichnet, daß** der untere Abschnitt (51) relativ zum Rinnenboden (9) um einen Winkel (β) von etwa 65°-85°, vorzugsweise 78° ± 4° abgewinkelt ist und der obere Abschnitt (52) relativ zum Rinnenboden (9) um einen Winkel (γ) von etwa 45°-65°, vorzugsweise 55° ± 4° abgewinkelt ist.

6. Rinnenschuß nach einem der Ansprüche 1 bis 5, **dadurch gekennzeichnet, daß** die Haltemittel aus Knebelbolzentaschen (21, 22) und die Rinnenschußverbindungsmittel aus Knebelbolzen bestehen, deren Knebelköpfe in die Knebelbolzentaschen (21, 22) einlegbar sind.

7. Rinnenschuß nach einem der Ansprüche 1 bis 6, **dadurch gekennzeichnet, daß** der untere Abschnitt (51) des Leitblechs (50) am unteren Rand eine Stegleiste (60) bildet, die bis an die Rinnenschußenden (19, 20) heranreicht.

8. Rinnenschuß nach einem der Ansprüche 1 bis 7, **dadurch gekennzeichnet, daß** die Begrenzungswand (54' , 55') der Aussparung (54, 55) parallel zu den Rinnenschußenden (19, 20) mit einer Ausbuchtung (62, 63) versehen ist.

9. Rinnenschuß nach einem der Ansprüche 1 bis 8, **dadurch gekennzeichnet, daß** das Leitblech (50) am Rinnenschuß (10) angeschweißt ist.

10. Rinnenschuß nach einem der Ansprüche 1 bis 9, **dadurch gekennzeichnet, daß** das Leitblech (50) mit seinem unteren Abschnitt (51), insbesondere mit der Stegleiste (60) an dessen unterem Rand an einer abbaustoßseitigen Gleitleiste (26) oder an einer Maschinenführung für die Gewinnungsmaschine angeschweißt ist.

11. Rinnenschuß nach einem der Ansprüche 1 bis 10, **dadurch gekennzeichnet, daß** das Leitblech (50) mit seinem oberen Abschnitt (52) an der Unterseite oder Stirnseite (29) des Horizontalstegs (17) eines annähernd T-förmigen oder L-förmigen, insbesondere gewalzten Seitenprofils (3) angeschweißt ist.

12. Rinnenschuß nach einem der Ansprüche 1 bis 10, **dadurch gekennzeichnet, daß** der Rinnenschuß einen Wechseltrog als Fördertrum aufweist und das Leitblech mit seinem oberen Abschnitt an der den Wechseltrog aufnehmenden Rahmenkonstruktion angeschweißt ist.

13. Rinnenschuß nach einem der Ansprüche 1 bis 12, **dadurch gekennzeichnet, daß** im Mittenbereich des Leitblechs (50), vorzugsweise mittig, eine Einhängeöffnung (61) vorgesehen ist.

14. Rinnenschuß nach einem der Ansprüche 1 bis 13, **dadurch gekennzeichnet, daß** zwischen dem Leitblech (50) und der abbaustoßseitigen Seitenwand und/oder den Seitenprofilen von Fördertrum und/oder Rücklauftrum wenigstens zwei Stützbleche (30, 32) angeordnet sind.

15. Rinnenschuß nach Anspruch 14, **dadurch gekennzeichnet, daß** das Leitblech (50) vertikal verlaufende Schlitzaussparungen (58, 59) auf Höhe der Stützbleche (30, 32) aufweist.

16. Rinnenschuß nach einem der Ansprüche 1 bis 15, **dadurch gekennzeichnet, daß** Führungsmittel für eine schneidende Gewinnungsmaschine, insbesondere einen Walzenlader vorgesehen sind, wobei vorzugsweise der Horizontalsteg (17) des abbaustoßseitigen Seitenprofils (3) des Fördertrums (1) die abbaustoßseitige Führung für den Walzenlader bildet.

## Claims

1. A conveyor pan for face conveyors in underground mining systems, in particular coal mining systems, with outward race and return race to guide a scraper chain, between which a conveyor bottom is disposed, with holding means on the goaf side and on the wall side located at the conveyor pan ends for a connecting component to link adjacent conveyor pans together, preferably with guide means for a mining machine which may be moved along the wall and with a static loading ramp connected to the conveyor pan on the wall side and extending from the floor to the level of the outward race, by means of which muck may be loaded into the outward race as the face conveyor is advanced and which consists of a curved or angled guide plate (50), the lower section (51) of which is steeper relative to the floor (11) or to the conveyor bottom (9) than its upper section (52) **characterized in that** the guide plate (50) is equipped at the conveyor pan ends (19, 20) with recesses (54, 55), the size of which is matched to the dimensions of the holding means and/or conveyor pan-connecting component.

2. Conveyor pan as recited in Claim 1, **characterized in that** the apex line (53) of the curve or bend of the guide plate (50) is disposed at the level of the conveyor bottom (9), preferably between the middle and the underside of the conveyor bottom (9).

3. Conveyor pan as recited in Claim 1 or 2, **characterized in that** the apex line (53) of the curve or bend of the guide plate (50) is located below the articulation point of the advancing system or pusher beams disposed on the goaf side for moving the face conveyor.

4. Conveyor pan as recited in one of Claims 1 to 3, **characterized in that** the lower section (51) and the upper section (52) of angled guide plate (50) are essentially flat and include an angle (α) of approximately 150°-170°, preferably approximately 160° ± 4°.

5. Conveyor pan as recited in one of Claims 1 to 4, **characterized in that** the lower section (51) is inclined relative to the conveyor bottom (9) by an angle (β) of approximately 65°-85°, preferably 78° ± 4°, and the upper section (52) is inclined relative to the conveyor bottom (9) by an angle (γ) of approximately 45°-65°, preferably 55° ± 4°.

6. Conveyor pan as recited in one of Claims 1 to 5, **characterized in that** the holding means consist of toggle bolt sockets (21, 22) and the conveyor pan-connecting components consist of toggle bolts, the toggle heads of which can be engaged in the toggle bolt sockets (21, 22).

7. Conveyor pan as recited in one of Claims 1 to 6, **characterized in that** the lower section (51) of the guide plate (50) forms a bar (60) at the lower edge, which extends as far as the conveyor pan ends (19, 20).

8. Conveyor pan as recited in one of Claims 1 to 7, **characterized in that** the limiting wall (54', 55') of the recess (54, 55) is equipped with a detent (62, 63) parallel to the conveyor pan ends (19, 20).

9. Conveyor pan as recited in one of Claims 1 to 8, **characterized in that** the guide plate (50) is welded to the conveyor pan (10) .

10. Conveyor pan as recited in one of Claims 1 to 9, **characterized in that** the lower section (51) of the guide plate (50), in particular the bar (60) at its lower edge, is welded to a sliding bar (26) on the wall side or to a machinery guide for the mining machine.

11. Conveyor pan as recited in one of Claims 1 to 10, **characterized in that** the upper section (52) of the guide plate (50) is welded to the underside or front face (29) of the horizontal web (17) of an approximately T-shaped or L-shaped and in particular rolled steel side section (3).

12. Conveyor pan as recited in one of Claims 1 to 11, **characterized in that** the conveyor pan features a removable trough as the outward race and the upper section of the guide plate is welded to the frame holding the removable trough.

13. Conveyor pan as recited in one of Claims 1 to 12, **characterized in that** in the center area of the guide plate (50), and preferably in the middle, a hole for a lifting hook (61) is provided.

14. Conveyor pan as recited in one of Claims 1 to 13, **characterized in that** at least two support plates (30, 32) are disposed between the guide plate (50) and the side wall on the wall side and/or the side sections of the outward race and/or return race.

15. Conveyor pan as recited in Claim 14, **characterized in that** the guide plate (50) has vertical slots (58, 59) at the level of the support plates (30, 32).

16. Conveyor pan as recited in one of Claims 1 to 15, **characterized in that** guide means for a cutting mining machine, in particular a drum cutter-loader, are provided with the horizontal web (17) of the outward race (1)'s side section (3) on the wall side preferably forming the wall-side guide for the drum cutter-loader.

## Revendications

1. Bac de saignée pour convoyeur de taille d'installations d'extraction souterraines, en particulier des d'installations d'extraction de charbon, comprenant un compartiment de convoyage et un compartiment de retour pour le guidage d'une chaîne de scrapeur, entre lesquels est agencé un fond de canal, comprenant des moyens de maintien disposés aux extrémités de bac de saignée du côté remblais et du côté front de taille pour un élément de liaison de bacs de saignée qui relie entre eux des bacs de saignée adjacents avec résistance à la traction, comportant de préférence des moyens de guidage pour une machine d'extraction pouvant être déplacée en long sur le front de taille et une rampe de chargement statique reliée aux extrémités de bac de saignée du côté front de taille et s'étendant depuis le daine jusqu'à la hauteur du compartiment de convoyage, par l'intermédiaire de laquelle les minerais abattus pendant l'avance du convoyeur de taille peuvent être chargés dans le compartiment de convoyage et qui est constituée d'une tôle de chicane courbée ou pliée (50) dont le tronçon inférieur (51) s'étend relativement par rapport au daine (11) ou au fond de canal (9) avec une pente plus accentuée que son tronçon supérieur (52), **caractérisé en ce que** la tôle de chicane (50) est munie aux extrémités de bac de saignée (19, 20) d'évidements (54, 55) dont la taille est adaptée aux dimensions des moyens de maintien et/ou des moyens de liaison de bacs de saignée.

2. Bac de saignée selon la revendication 1, **caractérisé en ce que** la ligne de sommet (53) de la courbure ou de la pliure de la tôle de chicane (50) est agencée à la hauteur du fond de canal (9), de préférence entre le milieu et la face inférieure du fond de canal (9).

3. Bac de saignée selon l'une ou l'autre des revendications 1 et 2, **caractérisé en ce que** la ligne de sommet (53) de la courbure ou de la pliure de la tôle de chicane (50) est agencée en dessous du point d'articulation des patins agencés en usine ou de la poutre de poussée agencée en usine pour l'avance du convoyeur de taille.

4. Bac de saignée selon l'une des revendications 1 à 3, **caractérisé en ce que** le tronçon inférieur (51) et le tronçon supérieur (52) de la tôle de chicane pliée (50) sont essentiellement plans et incluent un angle (α) d'environ 150° - 170°, de préférence d'environ 160° ± 4°.

5. Bac de saignée selon l'une des revendications 1 à 4, **caractérisé en ce que** le tronçon inférieur (51) est plié relativement par rapport au fond de canal (9) d'un angle (β) d'environ 65° - 85°, de préférence de 78° ± 4° et **en ce que** le tronçon supérieur (52) est plié relativement par rapport au fond de canal (9) d'un angle (γ) d'environ 45° - 65°, de préférence de 55° ± 4°.

6. Bac de saignée selon l'une des revendications 1 à 5, **caractérisé en ce que** les moyens de maintien sont constitués de poches de boulon à garrot (21, 22) et **en ce que** les moyens de liaison de bacs de saignée sont constitués de boulons à garrot dont les têtes de garrot peuvent être placées dans les poches de boulon à garrot (21, 22).

7. Bac de saignée selon l'une des revendications 1 à 6, **caractérisé en ce que** le tronçon inférieur (51) de la tôle de chicane (50) forme sur le bord inférieur un listeau de montant (60) qui s'étend jusqu'aux extrémités de bac de saignée (19, 20).

8. Bac de saignée selon l'une des revendications 1 à 7, **caractérisé en ce que** la paroi de délimitation (54', 55') de l'évidement (54, 55) est munie d'une courbure (62, 63) parallèlement aux extrémités de bac de saignée (19, 20).

9. Bac de saignée selon l'une des revendications 1 à 8, **caractérisé en ce que** la tôle de chicane (50) est soudée au bac de saignée (10).

10. Bac de saignée selon l'une des revendications 1 à 9, **caractérisé en ce que** la tôle de chicane (50) est soudée par son tronçon inférieur (51), en particulier par le listeau de montant (60) sur le bord inférieur dudit tronçon, à un listeau coulissant (26) du côté front de taille ou à un guidage de machine pour la machine d'extraction.

11. Bac de saignée selon l'une des revendications 1 à 10, **caractérisé en ce que** la tôle de chicane (50) est soudée par son tronçon supérieur (52) à la face inférieure ou à la face frontale (29) de la barrette horizontale (17) d'un profilé latéral (3) approximativement en forme de T ou en forme de L, en particulier laminé.

12. Bac de saignée selon l'une des revendications 1 à 10, **caractérisé en ce que** le bac de saignée présente un bac interchangeable comme compartiment de convoyage et **en ce que** la tôle de chicane est soudée par son tronçon supérieur à la construction de cadre qui réceptionne le bac interchangeable.

13. Bac de saignée selon l'une des revendications 1 à 12, **caractérisé en ce qu'**une ouverture d'accrochage (61) est prévue dans la zone centrale de la tôle de chicane (50), de préférence au milieu.

14. Bac de saignée selon l'une des revendications 1 à 13, **caractérisé en ce qu'**au moins deux tôles de soutien (30, 32) sont agencées entre la tôle de chicane (50) et la paroi latérale du côté front de taille et/ou les profilés latéraux du compartiment de convoyage et/ou du compartiment de retour.

15. Bac de saignée selon la revendication 14, **caractérisé en ce que** la tôle de chicane (50) présente des évidements en forme de fente (58, 59) à la hauteur des tôles de soutien (30, 32).

16. Bac de saignée selon l'une des revendications 1 à 15, **caractérisé en ce que** des moyens de guidage sont prévus pour une machine d'extraction coupante, en particulier une chargeuse à rouleau fraiseur, la barrette horizontale (17) du profilé latéral (3) du côté front de taille du compartiment de convoyage (1) formant de préférence le guidage du côté front de taille pour la chargeuse à rouleau fraiseur.
